# FASCICULE DE BREVET EUROPEEN

(11) **EP 0 670 974 B1**
(45) Date de publication et mention de la délivrance du brevet: **23.09.1998**
(21) Numéro de dépôt: 94900900.5
(22) Date de dépôt: 03.12.1993
(51) Int. Cl.: F16H 1/20, H02K 7/116, B60J 7/057

(54) **MOTOREDUCTEUR**
MOTORGETRIEBE
GEARED MOTOR

(30) Priorité: 04.12.1992 FR 9214654
(43) Date de publication de la demande: 13.09.1995
(73) Titulaire: SOCIETE D'ELECTROMECANIQUE DE L'USINE DES DOMES, F-63503 Issoire Cédex (FR)
(72) Inventeur: CLAUGE, Alain 28, rue de Varennes, F-63270 Vic-le-Comte (FR); BRUNEAU, Guy Lot la Plaigne, F-63500 Issoire (FR)
(74) Mandataire: Keib, Gérard
(86) Numéro de dépôt international: FR9301187
(87) Numéro de publication internationale: WO9413977

(56) Documents cités:
- EP-A- 0 410 487
- DE-C- 886 994
- FR-A- 1 510 998

## Description

La présente invention concerne un motoréducteur comportant un moteur électrique avec un arbre et un pignon de sortie dont l'axe est orienté de façon à être perpendiculaire à l'axe de l'arbre du moteur électrique et qui comporte un évidement cylindrique central adapté à recevoir un arbre de sortie.

L'état de la technique comporte un grand nombre de motoréducteurs dont la rotation de l'arbre du moteur est communiquée à un pignon dont l'axe est perpendiculaire à l'axe du moteur, la rotation de l'arbre du moteur pouvant être transmise sur le pignon par différents moyens comme par exemple une série de roues dentées, des courroies sans fin ou autres.

En fonction de l'utilisation d'un motoréducteur on rencontre des exigences variées quant à l'encombrement du motoréducteur car c'est lui, notamment dans son application dans l'automobile, qui doit s'adapter à des restrictions d'espace ainsi qu'à des exigences particulières quant au positionnement et à l'orientation de l'arbre de sortie vis-à-vis de la position du moteur électrique lui-même.

On connaît, d'après le FR-A-1 510 998, un groupe motoréducteur monobloc du type précité comportant un moteur électrique plat qui entraîne un réducteur à vis sans fin. Le boîtier du groupe comprend trois éléments en matière plastique injectée et présente deux surfaces principales perpendiculaires à l'arbre du rotor et à l'arbre de la vis sans fin, ces deux arbres dépassant du carter pour porter deux poulies respectives situées à l'extérieur du carter pour l'entraînement de la vis sans fin à partir du moteur.

Le moteur électrique plat et les deux poulies extérieures au boîtier constituent des solutions techniques qui ne donnent pas satisfaction.

On connaît, d'après le DE-C-886 994, un motoréducteur du type précité comportant, pour transmettre la rotation de l'arbre sur la périphérie du pignon, un arbre intermédiaire qui est orienté de façon à être parallèle à l'arbre du moteur électrique, le pignon de sortie comportant des moyens pour transmettre sa rotation à l'arbre de sortie, le motoréducteur comportant un boîtier plat qui définit un plan principal correspondant aux deux dimensions principales du boîtier, parallèle aux axes de l'arbre du moteur et de l'arbre intermédiaire et perpendiculaire à l'axe du pignon de sortie.

Le pignon moteur disposé en porte-à-faux sur l'arbre moteur et la roue dentée coopérant avec ce pignon, qui constituent le premier étage de réduction, sont des pignons droits, tandis que les roues de l'étage suivant de réduction sont des pignons coniques.

Un tel motoréducteur, qui comporte trois étages de réduction, a une structure complexe et onéreuse.

Le but de la présente invention est de prévoir un motoréducteur utilisable sans un espace réduit dont les dimensions et la forme nécessitent une nouvelle disposition du train de transmission de rotation de façon à pouvoir actionner un moyen de transmission de force qui est positionné dans un espace réduit traditionnellement encombré par le motoréducteur lui-même.

Un autre but de la présente invention est de prévoir un motoréducteur dans lequel l'axe de sortie se trouve à un endroit symétrique par rapport au gabarit du motoréducteur entier.

Suivant la présente invention, le motoréducteur du type précité est caractérisé en ce que le plan parallèle au plan principal et contenant l'axe de l'arbre intermédiaire est décalé, par rapport au plan parallèle au plan principal et contenant l'axe de l'arbre du moteur, dans la direction de l'axe du pignon de sortie, dans le sens opposé au plan principal, de façon à permettre de placer une zone d'engagement de l'arbre de sortie, adaptée à transmettre vers l'aval la rotation dudit arbre de sortie, du côté du plan principal opposé au plan, entre le plan principal et le plan parallèle au plan principal et définissant le gabarit du moteur électrique du côté du plan principal opposé au plan.

On obtient ainsi un boîtier plat de faible épaisseur décalé par rapport au moteur de manière telle que la zone d'engagement de l'arbre de sortie reste comprise à l'intérieur du gabarit du moteur électrique.

Suivant une première version de l'invention, l'arbre intermédiaire s'étend latéralement décalé de l'arbre du moteur électrique, à partir de l'extrémité libre de l'arbre du moteur électrique en direction essentiellement vers le moteur électrique.

Suivant une autre version de l'invention, l'axe du pignon de sortie est situé latéralement écarté de l'axe du moteur électrique et perpendiculairement à celui-ci, et à un endroit essentiellement au milieu de l'encombrement du boîtier du motoréducteur pris dans le sens parallèle à l'axe du moteur électrique.

Suivant une version avantageuse de l'invention l'arbre de sortie comporte une première zone axiale qui est disposée au niveau du pignon qui l'entoure, ainsi qu'une seconde zone axiale comportant un moyen d'engagement pour transmettre sa rotation à un élément d'actionnement.

Suivant une version préférée de l'invention, la première et la seconde zones de l'arbre de sortie sont disposées entre deux plans parallèles entre eux et parallèles au plan principal, lesdits deux plans parallèles étant définis de façon à inclure entre eux le gabarit du moteur électrique et ayant une distance l'un de l'autre correspondant au gabarit du moteur électrique.

La présente invention va maintenant être décrite plus en détail avec référence aux dessins dont :
- la figure 1 est une vue en perspective d'un motoréducteur selon la présente invention et illustrant essentiellement la partie supérieure du motoréducteur ;
- la figure 2 est une vue en perspective du même motoréducteur illustrant essentiellement la partie inférieure de ce motoréducteur ;
- la figure 3 montre des composantes intérieures du motoréducteur selon la présente invention ;
- la figure 4 montre en détail l'arbre de sortie et le pignon du motoréducteur selon la présente invention;
- la figure 5 montre l'application d'un motoréducteur selon la présente invention dans une application pour un toit ouvrant d'une voiture;
- les figures 6 et 6a montrent une autre forme de réalisation d'un motoréducteur selon la présente invention; et
- la figure 7 montre l'application du motoréducteur de la présente invention comme illustrée en figure 5, vue d'une direction horizontale.

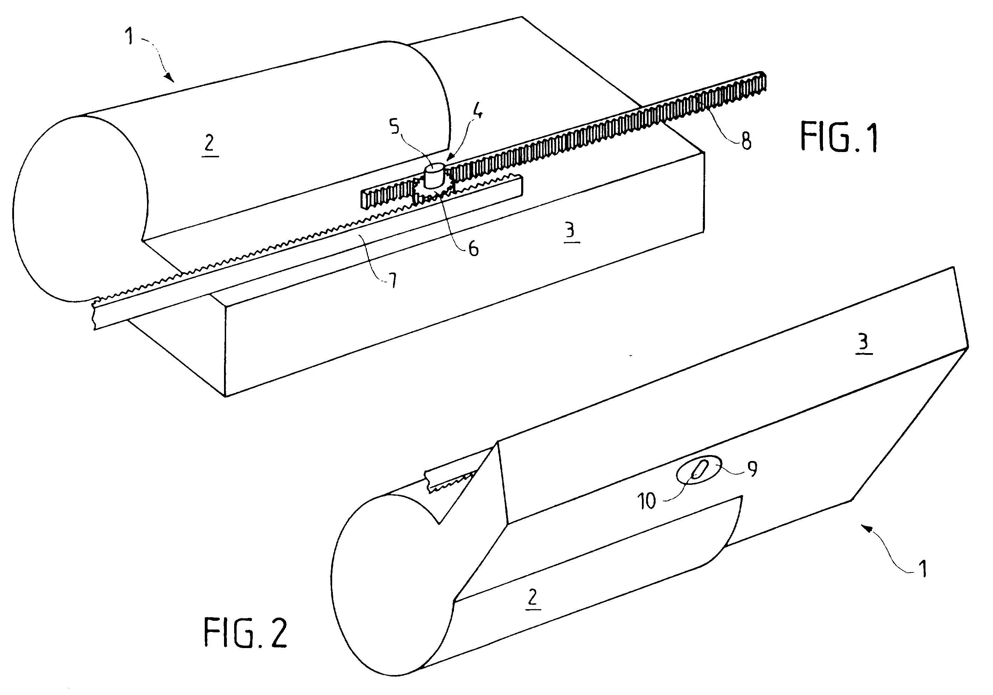

En se tournant maintenant vers la figure 1, un motoréducteur 1 selon la présente invention comporte un boîtier comprenant une partie 2 et une partie 3.

La partie 2 du boîtier du motoréducteur 1 est destinée à loger le moteur électrique d'une forme généralement cylindrique et la partie 3 de ce boîtier loge les éléments du train de transmission de la rotation qui est créée par le moteur électrique et qui est transmise à l'arbre de sortie 4 qui comporte à sa périphérie un moyen d'engagement en forme d'une zone dentée 6 qui est en engagement avec deux crémaillères 7 et 8.

On peut facilement comprendre que la rotation de l'arbre de sortie 4 entraîne un déplacement des crémaillères 7 et 8 dans leur sens longitudinal.

L'arbre de sortie 4 comporte une extrémité 5 qui peut servir de guidage.

La figure 2 montre le même motoréducteur que la figure 1 mais tourné de façon que l'on puisse voir sa surface inférieure. On distingue également les parties 2 et 3 du boîtier de ce motoréducteur et la surface inférieure de la partie 3 du boîtier comporte dans son centre une ouverture qui laisse apparaître l'extrémité inférieure 9 de l'arbre de sortie, extrémité qui comporte une ouverture longitudinale 10 adaptée pour recevoir une clef avec laquelle l'arbre de sortie peut être dégagé et actionné manuellement.

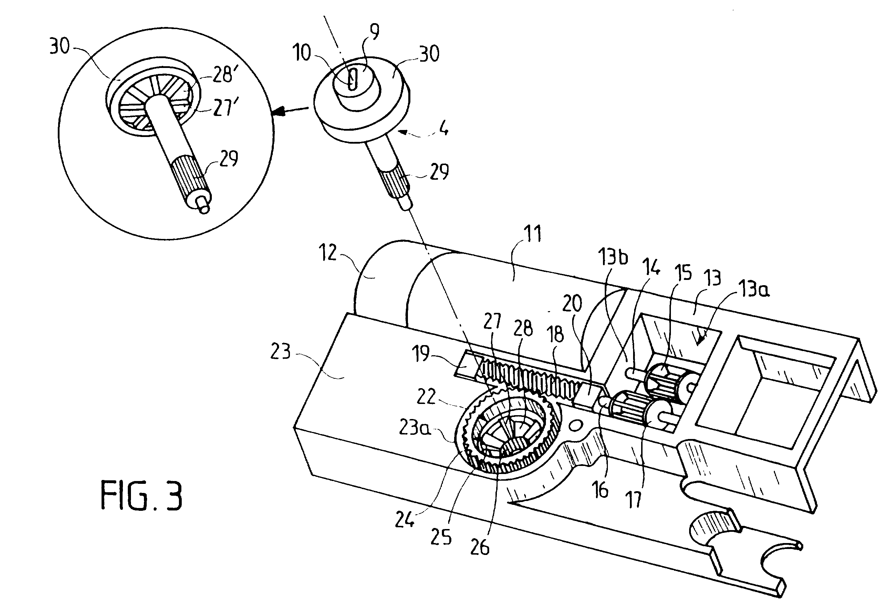

La figure 3 montre une première forme de réalisation du motoréducteur selon la présente invention dont on a enlevé les parties 2 et 3 de son boîtier. Le motoréducteur de la figure 3 comporte un moteur électrique 11 qui est fixé à un bloc de montage 23, 13, ledit moteur électrique comportant un arbre d'entrée 14 qui est logé dans un premier évidemment 13a du bloc de montage en traversant une paroi 13b de ce bloc. L'arbre d'entrée 14 du moteur électrique comporte une roue dentée 15 servant à l'entraînement d'une courroie sans fin qui n'est pas illustrée pour des raisons de clarté.

Dans le même évidement 13a du bloc de montage 13 se trouve au moins une extrémité d'un arbre intermédiaire 16 qui comporte une deuxième roue dentée 17 essentiellement identique à la roue 15 de l'arbre d'entrée 14, roue 17 qui est entraînée par la courroie non illustrée qui entoure également la roue 15.

L'arbre intermédiaire 16 est supporté dans deux blocs 19 et 20 est comporte à son extrémité opposée à la roue dentée 17 une chenille 18 qui se trouve en engagement avec la surface extérieure dentée d'un pignon 22 qui est logé dans un alésage cylindrique 23a du bloc de montage 23.

Le pignon 22 comporte une partie cylindrique vide 24 ainsi qu'un fond qui est constitué par une couronne formée de projections 27 et de dépressions 28 arrangée de façon radiale autour d'un trou central 26 du fond du pignon.

L'évidement 25 du pignon formé à l'intérieur de la partie cylindrique 24 est destinée pour loger le disque 30 de l'arbre de sortie 4 qui sera inséré dans le pignon en passant la zone 29 par le trou central 26 du pignon.

La surface inférieure du disque 30 est exécutée en forme de couronne complémentaire à celle du fond du pignon de façon à créé un engagement entre le pignon et l'arbre de sortie, engagement qui permet la transmission d'une rotation à partir du pignon sur l'arbre de sortie.

Pour cela, la couronne complémentaire de la surface inférieure du disque 30 de l'arbre de sortie 4 comporte des projections 28' et des dépressions 27' qui sont complémentaires au projections 27 et 28 du fond du pignon 22.

L'arbre de sortie 4 comporte une zone d'engagement 29 qui est destinée à s'engager avec les crémaillères 7 et 8 de la figure 1 et à son extrémité opposée à cette zone d'engagement, il comporte un moyen de saisie 9 ayant une ouverture 10 permettant l'introduction d'une clef par laquelle l'arbre de sortie peut être actionné de façon axiale afin de le mettre soit dans une position dans laquelle la couronne de sortie, qui est formée sur la surface inférieure du disque 30, est en engagement avec la couronne d'entrée formée sur le fond du pignon 22, soit dans une deuxième position axialement décalée, dans laquelle les deux couronnes se trouvent dégagées l'une de l'autre afin de permettre une rotation relative entre le pignon et l'arbre de sortie.

De façon non indiquée, le disque 30 de l'arbre de sortie est sollicité par un ressort dans sa position d'engagement vis-à-vis du pignon alors que l'introduction d'une clef dans l'ouverture 10 permet de saisir la partie 9 et la tirer axialement dans une direction opposée à la force du ressort (non illustré) afin de permettre le dégagement entre les deux couronnes.

Une fois que les deux couronnes sont dégagées l'une de l'autre, l'arbre de sortie 4 peut être mis en rotation manuellement afin d'entraîner les crémaillères 7 et 8 de la figure 1 sans l'aide du moteur électrique 11, ce qui permet de remplacer la force du moteur par une force manuelle, par exemple en cas de panne du moteur ou de son alimentation électrique.

Le moteur électrique comporte une partie électronique 12 qui inclut un interrupteur électronique faisant office d'interrupteur de sécurité qui coupe le courant d'attaque pour le moteur électrique lorsque sa rotation est gènée.

Ceci peut se produire lorsque l'élément qui doit être entraîné par le moteur électrique est bloqué ou pour toute autre raison de malfonctionnement de l'ensemble pour lequel le motoréducteur constitue l'élément actif.

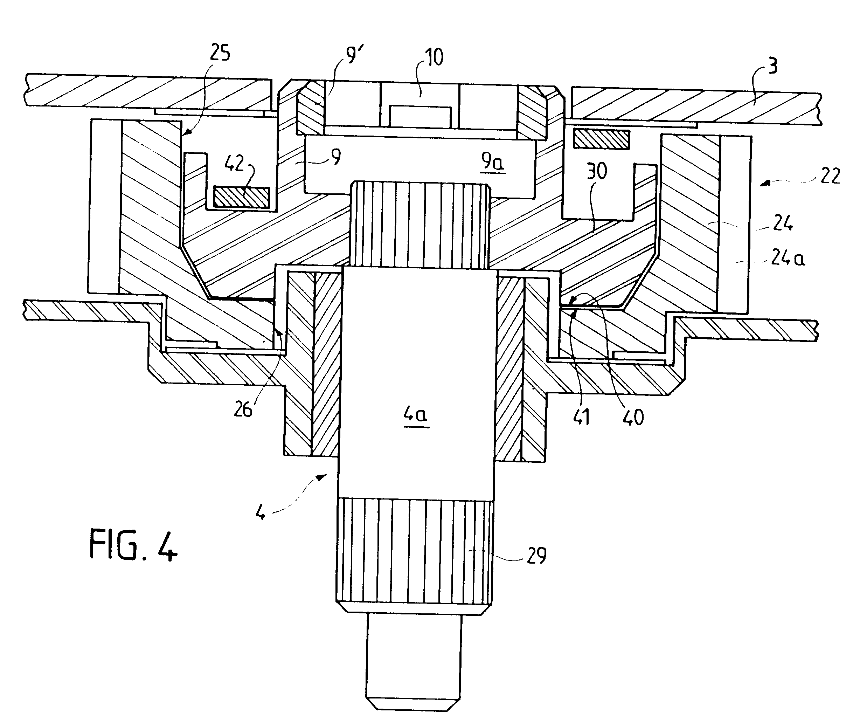

La figure 4 montre en détail l'ensemble de l'arbre de sortie 4 et le pignon 22 dans une position d'engagement mutuel. L'arbre de sortie 4 qui est composé d'une partie cylindrique 4a dont l'extrémité inférieure 29 est exécutée de façon dentée pour constituer une roue d'engagement avec les crémaillères 7 et 8 de la figure 1, porte à son extrémité supérieure le disque 30 dont la partie centrale supérieure 9 en saillie constitue le moyen de saisie qui a été mentionné plus haut.

Cette partie centrale 9 est fermée à son extrémité supérieure par un disque 9' qui comporte l'ouverture allongée 10.

En dessous du disque 9' se trouve un espace vide 9a qui permet l'introduction d'une clef par l'ouverture 10 et sa rotation d'un quart de tour, afin de saisir la surface inférieure du disque 9' lors d'une traction sur la clef.

Le disque 30 qui est logé à l'intérieur de la partie cylindrique vide 24 du pignon 22, est sollicitée vers le bas par un ressort 42 exécuté en anneau de serpent qui s'appuie contre la surface inférieure du boîtier 3 afin d'assurer un engagement de la surface inférieure 40 du disque 30 avec la surface supérieure 41 du fond du pignon 22.

Les deux surfaces 40 et 41 sont exécutées en forme de couronnes qui assurent qu'une rotation qui est transmise sur le pignon 22 à l'aide de sa périphérie dentée 24a soit retransmise sur le disque 30 afin de mettre en rotation la zone d'engagement 29 à partir de laquelle cette rotation est retransmise aux crémaillères 7 et 8 de la figure 1.

Lors de l'introduction d'une clef par l'ouverture 10 du disque 9', sa rotation d'un quart de tour et l'application d'une traction sur la clef, on obtient un dégagement des surfaces 40 et 41. De cette façon, le disque 30 et le pignon 22 sont mis hors engagement de façon à ce que l'arbre de sortie 4 puisse être mis en rotation manuellement par la clef sans être gêné par le pignon 22 qui continue à être relié fonctionnellement au moteur électrique.

Evidemment, l'extension axiale de la zone 29 est suffisamment longue pour assurer le maintien d'un bon engagement entre les crémaillères 7, 8 et la zone 29 lors d'un déplacement axial de l'arbre de sortie 4 pour passer de sa position d'entraînement par un moteur à sa position d'entraînement manuel.

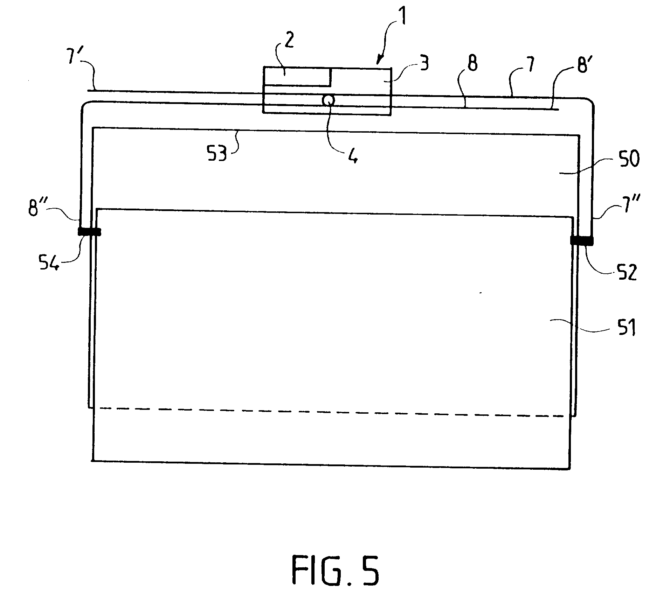

Un motoréducteur selon la présente invention comme décrit et illustré dans les figures 1 à 4 trouvera notamment son application pour l'actionnement d'un toit ouvrant d'une voiture et, la figure 5 montre très schématiquement la façon d'opérer pour l'entraînement d'un toit ouvrant.

Dans la figure 5, le plan du dessin constitue le toit d'une voiture, le numéro de référence 50 désignant l'ouverture dans ce toit, ouverture qui peut être dégagée ou fermée par un panneau 51 qui est actionné par le motoréducteur 1.

ce motoréducteur 1, qui est illustré très schématiquement comme boîtier comportant les parties 2 et 3, correspondant aux parties 2 est 3 de la figure 1, est orienté de façon à ce que l'arbre de sortie 4 se trouve un peu en avant et essentiellement au centre de la côte 53 de l'ouverture 50 du toit de la voiture.

L'arbre se sortie 4 est en engagement avec des crémaillères souples 7 et 8 guidées dans une gaine, et qui comportent chacune une première extrémité libre 7' et 8' ainsi qu'une deuxième extrémité 7" et 8" qui sont fixées aux attaches 52 et 54 du panneau 51 du toit ouvrant.

On comprend facilement qu'une rotation de l'arbre de sortie dans le sens de l'aiguille produit un déplacement du panneau 51 dans le sens de l'ouverture du toit ouvrant alors que la rotation de l'arbre de sortie dans le sens inverse de l'aiguille ferme le toit ouvrant.

Bien entendu, les crémaillères 7 et 8 flexibles sont guidées de façon à assurer une bonne transmission de mouvement à partir de l'arbre de sortie 4 jusqu'au panneau 51.

Ces crémaillères flexibles 7 et 8 peuvent être exécutées par exemple par un câble métallique qui comporte un fil métallique qui entoure le câble de façon hélicoïdale afin de créer une sorte de chenille qui est guidée de façon à assurer un bon engagement entre elle-même et la zone d'engagement 29 de l'arbre de sortie 4. Ce câble peut être logé dans une gaine en plastique ou en métal afin de s'assurer que le mouvement des crémaillères 7 et 8 au niveau de l'arbre de sortie 4 soit correctement transmis jusqu'aux attaches 52 et 54 du panneau 51.

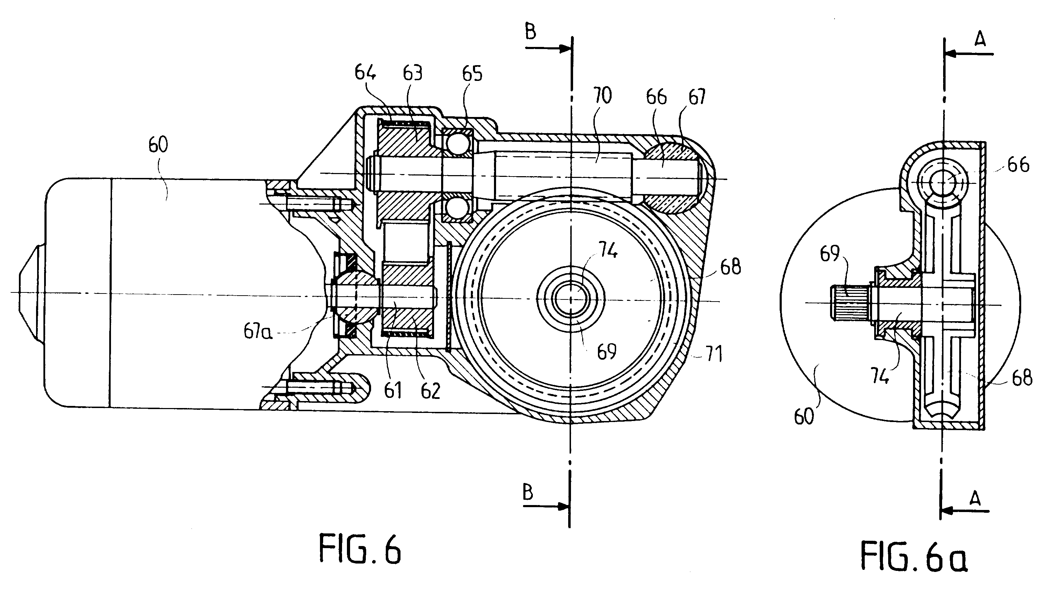

La figure 6 montre une forme de réalisation alternative d'un motoréducteur selon la présente invention, où le moteur électrique est logé dans un boîtier 60.

L'arbre d'entrée 61 qui est entraîné par le moteur électrique, comporte une première roue dentée 62, et une seconde roue dentée 63 qui est située sur l'extrémité d'un arbre intermédiaire 66 se trouve au même plan de rotation que la roue 62.

Une courroie sans fin 64 entoure les deux roues 62 et 63 de sorte que toute rotation de l'arbre d'entrée 61 est transmise sur l'arbre intermédiaire 66.

L'arbre d'entrée 61 est supporté par un palier en forme de boule 67a qui permet de compenser tout éventuel désalignement du moteur électrique ou de l'arbre 61.

L'arbre intermédiaire 66 est supporté par un roulement à billes 65 et par un autre palier à boules 67.

Les deux paliers à boules et 67 et 67a sont en bronze, poreux, imbibés de graisse pour permettre une bonne lubrification de ceux-ci.

L'arbre 66 comporte une chenille 70 qui est en engagement avec la périphérie dentée 71 d'un pignon 68 qui loge en son centre l'arbre de sortie 74.

Il est facile de comprendre que toute rotation du moteur électrique produit une rotation correspondante de l'arbre de sortie 74.

La figure 6a est une coupe transversale selon la ligne de coupure B-B de la figure 6 et on distingue facilement le boîtier 60 du moteur électrique, le pignon 68, l'arbre intermédiaire 66 et l'arbre se sortie 74 dont la zone d'engagement 69 se trouve à l'intérieur du gabarit du boîtier 60.

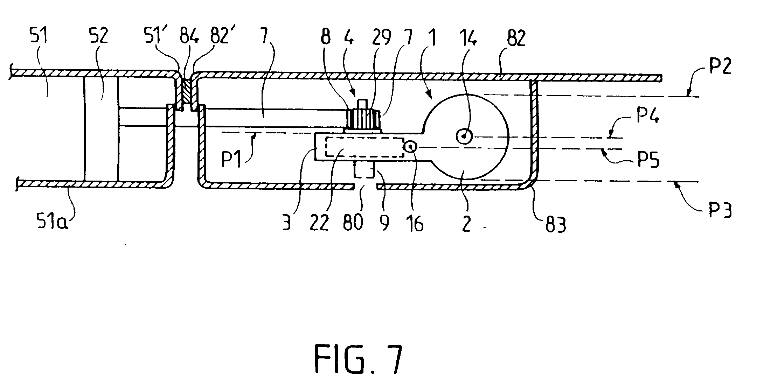

En se tournant maintenant vers la figure 7, nous allons décrire la disposition du motoréducteur selon la présente invention pour l'utilisation en tant qu'élément actif d'un toit ouvrant électrique d'une voiture.

Le signe de référence 82 représente la partie fixe du toit d'une voiture à partir de laquelle s'étend un boîtier 83 qui fait office de logement pour le motoréducteur 1.

Le motoréducteur 1 est en engagement avec une attache 52 du panneau mobile 51 du toit ouvrant à l'aide de la crémaillère 7, panneau qui est dessiné en figure 7 en position fermée de sorte que sa partie avant 51' aboute sur l'élément d'étanchéité 84 qui est fi>:é sur la lisière arrière 82' de la partie fixe 82 du toit de la voiture.

L'arbre de sortie 4 du motoréducteur 1 est en engagement intime avec la crémaillère 7 et la crémaillère 8 et, toute rotation de l'arbre de sortie 4 entraîne une translation vers la gauche ou vers la droite du panneau 51 afin d'ouvrir ou fermer le toit ouvrant.

Le motoréducteur 1 comporte un boîtier ayant une partie 2 essentiellement pour le logement du moteur électrique et une partie 3 qui reçoit tous les autres éléments du train de transmission à partir du moteur électrique jusqu'à l'arbre de sortie 4.

Le boîtier 83 qui loge le motoréducteur 1 comporte une ouverture 80 par laquelle on peut accéder au moyen de saisie 9 de l'arbre de sortie afin de le dégager du pignon 22 pour un actionnement manuel du panneau 51.

On comprend facilement que les dimensions de hauteur du boîtier 83 sont extrêmement limitées et la présente invention, comme mentionné au préambule de cette description, a pour but de créer un motoréducteur d'un encombrement particulièrement plat pour permettre son utilisation dans un environnement comme présenté à l'intérieur d'un toit de voiture.

Par les moyens particuliers de la présente invention, on arrive à situer la zone d'engagement 29 de l'arbre de sortie ainsi que toute la partie 3 du boîtier du motoréducteur 1 entre le gabarit du boîtier 2 qui correspond essentiellement au gabarit du moteur électrique, gabarit qui est défini les plans P2 et P3 qui sont parallèles entre eux ainsi qu'au principal P1 du boîtier du motoréducteur 1.

L'arbre de sortie 4 comporte une première zone qui se trouve à l'intérieur du pignon 22, et une seconde zone dite zone d'engagement 29 est située par rapport au moteur électrique de sorte que les deux zones se trouvent à l'intérieur des deux plans P2 et P3 constituant le gabarit du moteur électrique.

Les crémaillères 7 et 8, qui se trouvent forcément au niveau de la zone d'engagement 29 de l'arbre se sortie 4, peuvent donc également être situées entre les plans P4 et P5 pour permettre une transmission de force sur les attaches 52 et 54 au niveau intermédiaire de la hauteur de ces attaches, ce qui facilite leur guidage.

La figure 7 montre également, de façon schématique, l'emplacement de l'arbre d'entrée 14 du moteur électrique qui se trouve dans un plan P4 ainsi que l'arbre intermédiaire 16 qui se trouve sur un plan P5. Le décalage du plan P5 de l'arbre intermédiaire 16 vers le bas, par rapport au plan P4 de l'arbre 14, permet de situer la zone d'engagement 29 de l'arbre de sortie 4 en dessous du plan P2 qui définit le point supérieur de l'encombrement du moteur électrique.

La présente invention a été décrite en fonction de deux formes de réalisation avantageuses sans être limitée aux détails de ce qui a été décrit. De nombreuses améliorations et perfectionnements peuvent être apportés à cette invention par l'homme du métier sans sortir du cadre des revendications.

## Revendications

1. Motoréducteur (1) comportant un moteur électrique (11) avec un arbre (14) et un pignon (22) de sortie dont l'axe est orienté de façon à être perpendiculaire à l'axe de l'arbre (14) du moteur électrique et qui comporte un évidement cylindrique central adapté à recevoir un arbre de sortie (4), le motoréducteur (1) comportant, pour transmettre la rotation de l'arbre (14) sur la périphérie du pignon (22), un arbre intermédiaire (16) qui est orienté de façon à être parallèle à l'arbre (14) du moteur électrique, le pignon de sortie (22) comportant des moyens pour transmettre sa rotation à l'arbre de sortie (4), le motoréducteur (1) comportant un boîtier plat (3) qui définit un plan principal (P1) correspondant aux deux dimensions principales du boîtier (3), parallèle aux axes de l'arbre (14) du moteur (11) et de l'arbre intermédiaire (16), et perpendiculaire à l'axe du pignon de sortie (22), caractérisé en ce que le plan (P5) parallèle au plan (P1) et contenant l'axe de l'arbre intermédiaire (16) est décalé, par rapport au plan (P4) parallèle au plan (P1) et contenant l'axe de l'arbre (14) du moteur (11), dans la direction de l'axe du pignon de sortie (22), dans le sens opposé au plan (P1), de façon à permettre de placer une zone d'engagement (29) de l'arbre de sortie (4), adaptée à transmettre vers l'aval la rotation dudit arbre de sortie (4), du côté du plan (P1) opposé au plan (P5) entre le plan (P1) et le plan (P2) parallèle au plan (P1) et définissant le gabarit du moteur électrique (11) du côté du plan (P1) opposé au plan (P5).

2. Motoréducteur selon la revendication 1, caractérisé en ce que l'arbre intermédiaire (16) s'étend latéralement décalé de l'arbre (14) du moteur électrique, à partir de l'extrémité libre de l'arbre (14) du moteur électrique en direction essentiellement vers le moteur électrique.

3. Motoréducteur selon la revendication 1 ou 2, caractérisé en ce que l'axe du pignon de sortie (22) est situé latéralement écarté de l'axe du moteur électrique et perpendiculairement à celui-ci, et à un endroit essentiellement au milieu de l'encombrement du boîtier (3) du motoréducteur pris dans le sens parallèle à l'axe du moteur électrique (11).

4. Motoréducteur selon l'une quelconque des revendications précédentes, caractérisé en ce que l'arbre de sortie (4) comporte une première zone axiale (4a) qui est disposée au niveau du pignon (22) qui l'entoure, ainsi qu'une seconde zone axiale (29) comportant un moyen d'engagement pour transmettre sa rotation à un élément d'actionnement (7, 8).

5. Motoréducteur selon la revendication 4, caractérisé en ce que la première et la seconde zones (4a, 29) de l'arbre de sortie (4) sont disposées entre deux plans (P2, P3) parallèles entre eux et parallèles au plan principal (P1), lesdits deux plans parallèles étant définis de façon à inclure entre eux le gabarit du moteur électrique et ayant une distance l'un de l'autre correspondant essentiellement au gabarit du moteur électrique (11).

## Patentansprüche

1. Getriebemotor (1), der einen Elektromotor (11) mit einer Welle (14) und einem Ausgangsritzel (22) aufweist, dessen Achse so ausgerichtet ist, daß sie senkrecht zur Achse der Welle (14) des Elektromotors verläuft, und der eine zentrale zylindrische Aussparung aufweist, die dazu bestimmt ist, eine Ausgangswelle (4) aufzunehmen, wobei der Getriebemotor (1) zum Übertragen der Drehung der Welle (14) an den Umfang des Ritzels (22) eine Zwischenwelle (16) aufweist, die so orientiert ist, daß sie zur Welle (14) des Elektromotors parallel ist, wobei das Ausgangsritzel (22) Mittel zum Übertragen seiner Drehung an die Ausgangswelle (4) aufweist und der Getriebemotor (1) ein ebenes Gehäuse (3) aufweist, das eine Hauptebene (P1) entsprechend den beiden Hauptabmessungen des Gehäuses (3) festlegt, die parallel zu den Achsen der Welle (14) des Motors (11) und der Zwischenwelle (16) und senkrecht zur Achse des Ausgangsritzels (22) ist, dadurch gekennzeichnet, daß die zur Hauptebene (P1) parallele und die Achse der Zwischenwelle (16) enthaltende Ebene (P5) in Bezug auf die zur Hauptebene (P1) parallele und die Achse der Welle (14) des Motors (11) enthaltende Ebene (P4) in Richtung der Achse des Ausgangsritzels (22), in entgegengesetzter Richtung zur Hauptebene (P1), verschoben ist, so daß es möglich ist, eine Eingriffszone (29) der Ausgangswelle (4), die dazu bestimmt ist, die Drehung derAusgangswelle (4) abwärts zu übertragen, auf der Seite der Hauptebene (P1), die der Ebene (P5) gegenüberliegt, zwischen der Hauptebene (P1) und der zur Hauptebene (P1) parallelen Ebene (P2), welche die Umgrenzungsform des Elektromotors (11) auf der der Ebene (P5) gegenüberliegenden Seite der Hauptebene (P1) ) festlegt, anzuordnen.

2. Getriebemotor nach Anspruch 1, dadurch gekennzeichnet, daß die Zwischenwelle (16) seitlich versetzt von der Welle (14) des Elektromotors verläuft, ausgehend vom freien Endabschnitt der Welle (14) des Elektromotors im wesentlichen in Richtung auf den Elektromotor.

3. Getriebemotor nach Anspruch 1 oder 2, dadurch gekennzeichnet, daß die Achse desAusgangsritzels (22) seitlich von der Achse des Elektromotors beabstandet und zu dieser senkrecht ist, wobei sie sich an einer im wesentlichen in der Mitte der Gesamtabmessung des Gehäuses (3) des Getriebemotors, in Richtung parallel zur Achse des Elektromotors (11) betrachtet, befindet.

4. Getriebemotor nach einem der vorangehenden Ansprüchc, dadurch gekennzeichnet, daß die Ausgangswelle (4) eine erste axiale Zone (4a) aufweist, die sich in Höhe des diese umgebenden Ritzels (22) befindet, und eine zweite axiale Zone (29), die ein Eingriffsmittel aufweist, um deren Drehung an ein Betätigungselement (7, 8) zu übertragen.

5. Getriebemotor nach Anspruch 4, dadurch gekennzeichnet, daß die erste und die zweite Zone (4a, 29) der Ausgangswelle (4) zwischen zwei untereinander und zur Hauptebene parallelen Ebenen (P2, P3) angeordnet sind, wobei die beiden parallelen Ebenen so festgelegt sind, daß sich die Umgrenzungsform des Elektromotors dazwischen befindet und ihr gegenseitiger Abstand im wesentlichen der Umgrenzungsform des Elektromotors (11) entspricht.

## Claims

1. Geared motor (1) comprising an electric motor (11) with a shaft (14), and an output pinion (22) the axis of which is orientated in such a way as to be perpendicular to the axis of the shaft (14) of the electric motor and which comprises a central cylindrical recess adapted to receive an output shaft (4); the geared motor (1) comprising, for transmitting the rotation of the shaft (14) onto the periphery of the pinion (22), an intermediate shaft (16) which is orientated in such a way as to be parallel to the shaft (14) of the electric motor; the output pinion (22) comprising means for transmitting its rotation to the output shaft (4); the geared motor (1) comprising a flat casing (3) which defines a main plane (P1) corresponding to the two main dimensions of the casing (3), parallel to the axes of the shaft (14) of the motor (11) and of the intermediate shaft (16), and perpendicular to the axis of the output pinion (22); characterized in that the plane (P5) parallel to the plane (P1) and containing the axis of the intermediate shaft (16) is offset, with respect to the plane (P4) parallel to the plane (P1) and containing the axis of the shaft (14) of the motor (11), in the direction of the axis of the output pinion (22) in the direction away from the plane (P1) so as to make it possible to place an engagement region (29) of the output shaft (4), which region is adapted to transmit the rotation of the said output shaft (4) downstream, on the opposite side of the plane (P1) to the plane (P5), between the plane (P1) and the plane (P2) parallel to the plane (P1) and defining the extent of the electric motor (11) on the opposite side of the plane (P1) to the plane (P5).

2. Geared motor according to Claim 1, characterized in that the intermediate shaft (16) extends laterally offset from the shaft (14) of the electric motor, from the free end of the shaft (14) of the electric motor in the direction essentially towards the electric motor.

3. Geared motor according to Claim 1 or 2, characterized in that the axis of the output pinion (22) is situated laterally away from the axis of the electric motor and is perpendicular to it, and at a point essentially at the middle of the bulk of the casing (3) of the geared motor considered in the direction parallel to the axis of the electric motor (11).

4. Geared motor according to any one of the preceding claims, characterized in that the output shaft (4) comprises a first axial region (4a) which is arranged in the region of the pinion (22) which surrounds it, and a second axial region (29) comprising an engagement means for transmitting its rotation to an actuating element (7, 8).

5. Geared motor according to Claim 4, characterized in that the first and second regions (4a, 29) of the output shaft (4) are arranged between two mutually parallel planes (P2, P3) which are parallel to the main plane (P1), the said two parallel planes being defined in such a way as to contain the extent of the electric motor between them, and being a distance apart which essentially corresponds to the extent of the electric motor (11).
